# FASCICULE DE BREVET EUROPEEN

(11) **EP 2 643 154 B1**
(45) Date de publication et mention de la délivrance du brevet: **05.11.2014**
(21) Numéro de dépôt: 11790933.3
(22) Date de dépôt: 24.11.2011
(51) Int. Cl.: B32B 1/08, B32B 27/18, F16L 11/04

(54) **CONDUITE FLEXIBLE SOUS MARINE COMPRENANT UNE COUCHE COMPRENANT UNE RÉSINE POLYMÈRE COMPRENANT DES NANOTUBES ALUMINO- OU MAGNÉSIOSILICATE**
FLEXIBLER SCHLAUCH FÜR DEN EINSATZ AM MEERESBODEN MIT EINER SCHICHT AUS EINEM POLYMER-HARZ MIT ALUMINIUM- ODER MAGNESIUM-SILIKAT NANO-RÖHRCHEN
FLEXIBLE SUBSEA HOSE COMPRISING A LAYER COMPRISING A POLYMER RESIN WITH ALUMINIUM- OR MAGNESIUM SILICATE NANO TUBES

(30) Priorité: 25.11.2010 FR 1059735
(43) Date de publication de la demande: 02.10.2013
(73) Titulaire: Technip France, 92400 Courbevoix (FR)
(72) Inventeur: TRONC, Frédéric, F-76000 Rouen (FR); COUTAREL, Alain, F-76130 Mont Saint Aignan (FR)
(74) Mandataire: Domenego, Bertrand
(86) Numéro de dépôt international: PCT/EP2011/070914
(87) Numéro de publication internationale: WO 2012/069577

(56) Documents cités:
- WO-A1-2010/085419
- WO-A1-2011/098717
- US-A1- 2007 204 929
- US-A1- 2008 072 987
- US-A1- 2009 308 475
- US-A1- 2010 189 946
- US-A1- 2010 203 328
- ZHU J ET AL: "REINFORCING EPOXY POLYMER COMPOSITES THROUGH COVALENT INTEGRATION OF FUNCTIONALIZED NANOTUBES", ADVANCED FUNCTIONAL MATERIALS, WILEY - V C H VERLAG GMBH & CO. KGAA, DE, vol. 14, no. 7, 1 juillet 2004 (2004-07-01), pages 643-648, XP001199185, ISSN: 1616-301X, DOI: 10.1002/ADFM.200305162
- MONIRUZZAMAN M ET AL: "Polymer nanocomposites containing carbon nanotubes", MACROMOLECULES, AMERICAN CHEMICAL SOCIETY, WASHINGTON, DC; US, vol. 39, 8 août 2006 (2006-08-08), pages 5194-5205, XP002631356, ISSN: 0024-9297, DOI: 10.1021/MA060733P [extrait le 2006-07-07]

## Description

La présente invention concerne une conduite flexible sous-marine destinée au transport des fluides en eau profonde. Ces fluides sont notamment des gaz ou des liquides, de préférence des hydrocarbures.

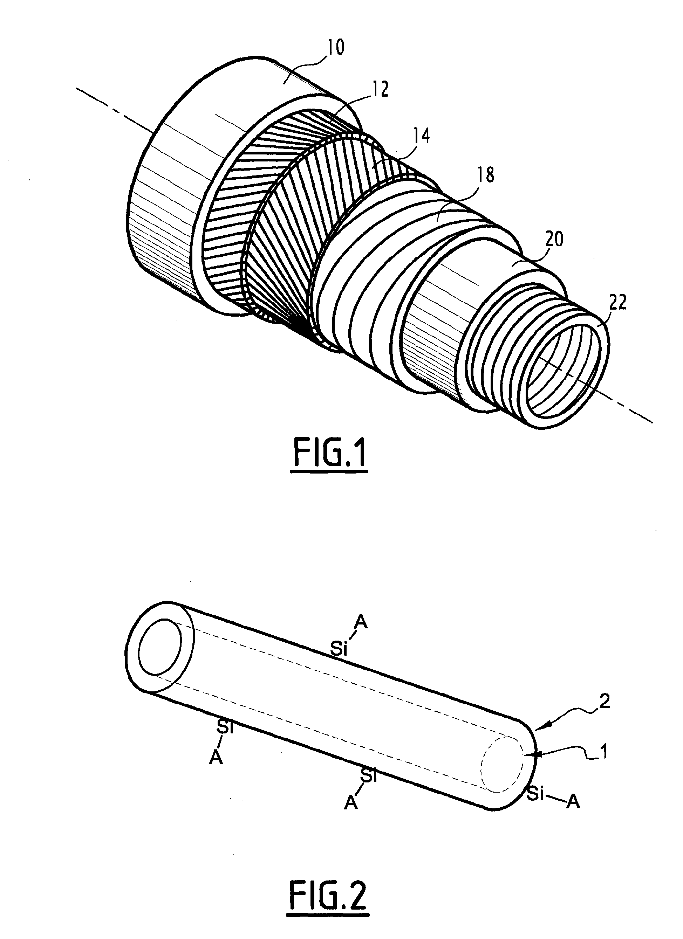

Les conduites flexibles de transport des hydrocarbures comportent généralement, de l'extérieur vers l'intérieur de la conduite :
- une gaine polymérique externe pour protéger l'ensemble de la conduite et notamment pour empêcher l'eau de mer de pénétrer dans son épaisseur,
- des nappes d'armures de traction,
- une voûte de pression,
- une gaine polymérique interne d'étanchéité, et
- éventuellement une carcasse métallique (figure 1).

Si la conduite comprend une carcasse métallique, elle est dite à passage non lisse ("rough bore" en langue anglaise). Si la conduite est exempte de carcasse métallique, elle est dite à passage lisse (" smooth-bore " en langue anglaise). Généralement, pour le transport d'hydrocarbures, une conduite comportant une carcasse est préférée, alors qu'une conduite exempte de carcasse sera adaptée pour le transport d'eau et/ou de vapeur d'eau sous pression.

La carcasse métallique et la voûte de pression sont constituées d'éléments longitudinaux enroulés à pas court, et elles confèrent à la conduite sa résistance aux efforts radiaux tandis que les nappes d'armures de traction sont constituées de fils métalliques enroulés selon des pas longs pour reprendre les efforts axiaux.

La nature, le nombre, le dimensionnement et l'organisation des couches constituant les conduites flexibles sont essentiellement liés à leurs conditions d'utilisation et d'installation. Les conduites peuvent comprendre des couches supplémentaires à celles susmentionnées.

Dans la présente demande, la notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 55°, typiquement compris entre 25° et 55° pour les nappes d'armures.

Ces conduites flexibles conviennent notamment au transport de fluides, notamment d'hydrocarbures dans les fonds marins et ce, à de grandes profondeurs. Plus précisément elles sont dites de type non lié ("unbonded" en langue anglaise) et elles sont ainsi décrites dans les documents normatifs publiés par l'American Petroleum Institute (API), API 17J et API RP 17B.

Les conduites flexibles peuvent être utilisées à grande profondeur, typiquement jusqu'à 2500 mètres de profondeur. Elles permettent le transport de fluides, notamment d'hydrocarbures, ayant une température atteignant typiquement 130°C et pouvant même dépasser les 150°C et une pression interne pouvant atteindre 1000 bars, voire 1500 bars.

Le matériau constitutif de la gaine polymérique interne d'étanchéité doit être stable chimiquement et capable de résister mécaniquement au fluide transporté et à ses caractéristiques (composition, température et pression). Ce matériau doit combiner des caractéristiques de ductilité, de résistance au temps (généralement, la conduite doit avoir une durée de vie d'au moins 20 ans), de résistance mécanique, à la chaleur et à la pression. Le matériau doit notamment être inerte chimiquement vis-à-vis des composés chimiques constituant le fluide transporté.

Des conduites comprenant une gaine polymérique interne d'étanchéité à base de polymère, notamment de polyamide, de polyéthylène greffé (Crossflex^{®}) ou de polyfluorure de vinylidène, peuvent notamment être utilisées. Toutefois, les propriétés thermomécaniques des polymères dans les conditions d'utilisation précédemment citées (hautes température et pression, acidité élevée et présence d'eau) peuvent être nettement diminuées. En particulier, les polyamides peuvent être dégradés par hydrolyse. De plus, il est difficile d'utiliser des polyéthylènes à des températures supérieures à 65°C. Ainsi, de nombreux travaux ont été rapportés pour tenter d'améliorer ces propriétés, en particulier pour améliorer leurs résistances au fluage et à la tension ou compression et permettre leur utilisation dans les conditions de températures et de pression précitées.

Le document US 2010/0189946A1 décrit une conduite flexible destinée au transport de fluides comprenant une pluralité de couches dont au moins une couche comprend une résine polymère comprenant au moins un nanotube.

La demande internationale WO 2008/113362 décrit une conduite flexible comprenant une couche comprenant une résine polymère comprenant une argile cationique de type silicate liée de façon non covalente au polymère, cette argile étant décrite comme permettant d'augmenter la résistance à la corrosion et d'améliorer la résistance mécanique de ladite couche.

Toutefois, la préparation d'une couche dans laquelle l'argile cationique, sous forme de feuillets, est répartie de façon homogène est généralement peu aisée. Or, l'homogénéité de la couche est très importante, car plus les feuillets sont indépendants les uns des autres et répartis de façon homogène, plus la surface de contact entre le polymère et le feuillet est importante, et plus l'impact de l'argile sur l'amélioration des propriétés est perceptible.

Ainsi, WO 2008/113362 décrit un procédé de préparation de la couche qui se différencie d'un procédé classique de préparation d'une résine polymère, en ce qu'il nécessite :
- un cisaillement suffisant pour obtenir une homogénéité adéquate,
- de réaliser le compoundage à des températures plus faibles que celles usuellement utilisées,
- d'ajouter une étape d'exfoliation et/ou d'intercalation (intercalation d'un polymère ou d'une amine quaternaire entre les feuillets pour les éloigner les uns des autres).

Un des objectifs de la présente invention est de fournir une conduite flexible sous marine comprenant une couche à base de polymère présentant des propriétés thermomécaniques améliorées permettant son utilisation pour le transport de fluides, tels que des hydrocarbures, notamment à haute pression et haute température et qui puisse être préparée par un procédé classique de préparation d'une résine polymère, en particulier qui ne nécessite pas d'étape d'exfoliation.

A cet effet, selon un premier objet, l'invention a pour objet une conduite flexible sous marine destinée au transport de fluides, notamment d'hydrocarbures, comprenant une pluralité de couches dont au moins une couche comprend une résine polymère comprenant au moins un nanotube alumino- ou magnésio-silicate lié chimiquement au polymère par liaison covalente.

Le nanotube alumino- ou magnésiosilicate peut être un aluminosilicate, tel que l'halloysite de formule Al₂SiO₅(OH)₄·nH₂O ou l'Imogolite de formule Al₂SiO₃(OH)₄·nH₂O, ou un magnésiosilicate de formule Mg₃Si₂O₅(OH)₄·nH₂O, dans lesquelles « nH₂O » signifie que les nanotubes sont sous forme hydratée (n étant supérieur à 0) ou non (n représentant alors 0). L'halloysite est particulièrement préféré. Ces nanotubes alumino- ou magnésiosilicate sont avantageusement disponibles dans le commerce, par exemple chez NaturalNano™, Imerys^{®}, Sigma Aldrich^{®} ou Northstar Clay mines, Inc^{®}, ou peuvent être synthétisés par des méthodes connues de l'homme du métier, par exemple décrites dans US 4 150 099.

Ces nanotubes ont une structure tubulaire creuse, ladite structure comportant deux feuillets tubulaires ayant le même axe : un feuillet tubulaire externe dans lequel se situe un feuillet tubulaire interne. La structure chimique du feuillet tubulaire externe est proche de SiO₂.

Généralement, un tel nanotube a une longueur de 1 à 15 µm et/ou un diamètre interne (en considérant le feuillet tubulaire interne) de 5 à 200 nm, typiquement de 10 à 150 nm.

Les inventeurs ont découvert que des nanotubes alumino- ou magnésio-silicate liés chimiquement par liaison covalente à un polymère permettent de diminuer la mobilité des chaînes de polymère les unes par rapport aux autres et donc d'améliorer les propriétés thermomécaniques du polymère, en particulier d'améliorer sa résistance au fluage et à la tension ou compression et/ou ses propriétés ignifuges.

Par un nanotube alumino- ou magnésio-silicate « lié chimiquement » par liaison covalente au polymère, on entend que le nanotube comprend au moins un groupement susceptible de former une liaison covalente avec le polymère, appelé groupement A dans la présente demande. On entend par « groupement susceptible de former une liaison covalente» tout atome, fonction susceptible de former une liaison covalente ou tout groupe porteur d'un tel atome ou d'une telle fonction.

La liaison chimique entre le polymère et le nanotube alumino- ou magnésiosilicate dans la couche de la conduite est une liaison covalente. Cette liaison chimique peut notamment être une liaison de type ester, amide, amine, éther, thioéther, urée, imine, imide, sulfonamide, carbamate, phosphate, siloxane (Si-O-Si), silane (Si-C) ou carbone-carbone. Les liaisons covalentes sont avantageusement les liaisons chimiques les plus stables.

Le polymère de la couche de la conduite flexible est un polymère capable de se lier de façon covalente au nanotube. Le polymère peut comporter dans son squelette des groupes capables de se lier de façon covalente au nanotube. Il peut également comporter des chaînes latérales fonctionnelles capables de se lier de façon covalente au nanotube. Des chaînes latérales fonctionnelles sont, par exemple, des chaînes latérales porteuses de groupes COOH, NH₂, OH, époxyde, nitrile, anhydride ou trialcoxysilane. Le polymère est de préférence un polymère organique (c'est-à-dire comportant des atomes de carbone), et en particulier dont le squelette est organique.

Dans un premier mode de réalisation, le polymère de la couche de la conduite flexible est un polyamide comportant éventuellement des chaînes latérales fonctionnelles, notamment telles que définies ci-dessus. Les polyamides sont avantageux car ils peuvent être utilisés à de hautes températures, généralement jusqu'à 100°C. Le polyamide de la couche de la conduite flexible sous marine peut être un homopolyamide ou un copolyamide, tel que, par exemple, du polyamide 6, du polyamide 4.6, du polyamide 6.6, du polyamide 11, du polyamide 12, du polyamide 12.12, du polyamide 10.12, du polyamide 6.10, du polyamide 6.12, du polyamide 6.9, du polyamide 9.9, du polyamide 9T, du polyamide 12T, du polyamide 10T, du polyamide 12I, du polyamide 12T, du polyamide 12T.12, du polyamide 10T.12, du polyamide 12T.106, du polyamide 10T.106, du polyamide 6.66, du polyamide 6.612, du polyamide 6.66.610, du polyamide 6.66.12, du polyamide 6.6T, du polyamide 6T.6, du polyamide 6T.12, du polyamide 6T.6I, du polyamide 6I.6T, du polyamide 6.6I, du polyamide 6T.66, du polyamide 6T.66.12, du polyamide 12.MACMI, du polyamide 66.6I.6T, du polyamide MXD6.6, MXD10, un polyphtalamide, un polyarylamide, un polyesteramide, un polyétheresteramide, un polyétheramide ou leurs mélanges.

De préférence, le polyamide est choisi parmi le polyamide 11, le polyamide 12, le polyamide 6.12 et un polyphtalamide.

Dans un second mode de réalisation, le polymère de la couche de la conduite flexible est un polyéthylène comportant des chaînes latérales fonctionnelles. Les polymères polyéthylène sont intéressants car ils ne se dégradent pas par hydrolyse et sont peu coûteux. Des chaînes latérales fonctionnelles sont, par exemple, des chaînes latérales porteuses de groupes COOH, NH₂, OH, époxyde, nitrile, anhydride ou trialcoxysilane, de préférence trialcoxysilane, notamment des chaînes latérales fonctionnelles porteuses de groupes de formule -Si-(OR₁₀)(OR₁₁)(OR₁₂), où R₁₀, R₁₁ et R₁₂ sont indépendamment des groupes alkyle, de préférence n-propyle, isopropyle, éthyle ou méthyle, de manière particulièrement préférée méthyle. Par exemple, le polyéthylène peut comprendre des chaînes latérales de formule -CH₂-CH₂-Si-(OR₁₀)(OR₁₁)(OR₁₂), où R₁₀, R₁₁ et R₁₂ sont tels que définis ci-dessus, en particulier des chaînes latérales de formule -CH₂-CH₂-Si-(OMe)₃, qui sont particulièrement préférées car les fonctions Si-OMe sont facilement hydrolysables en fonctions silanol Si-OH. Ainsi, le polymère peut par exemple être un polymère Crossflex^{®}, de formule suivante :

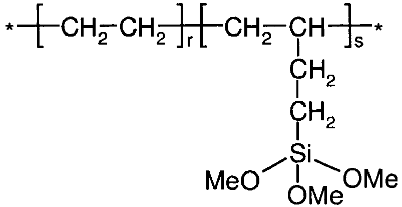

Les polymères polyéthylène comportant des chaînes latérales fonctionnelles sont soit commerciaux, soit peuvent être préparés par des techniques connues de l'homme du métier. Par exemple, les polymères polyéthylène comportant des chaînes latérales de formule -CH₂-CH₂-Si-(OR₁₀)(OR₁₁)(OR₁₂) peuvent être préparés par réaction entre du polyéthylène et le dérivé vinylsilane de formule CH₂=CH-Si-(OR₁₀)(OR₁₁)(OR₁₂) en présence de peroxyde (procédé Sioplast).

Une conduite flexible comprenant une couche comportant une résine polyéthylène comprenant au moins un nanotube alumino- ou magnésiosilicate lié de façon covalente au polyéthylène peut avantageusement être utilisée à des températures plus élevées qu'une conduite flexible comprenant une couche comportant une résine polyéthylène, et en particulier à des températures compatibles à une utilisation pour le transport d'hydrocarbures.

Dans un troisième mode de réalisation, le polymère de la couche de la conduite flexible est un homopolymère ou copolymère de polyfluorure de vinylidène (PVDF) comportant des chaînes latérales fonctionnelles. Des chaînes latérales fonctionnelles sont, par exemple, des chaînes latérales porteuses de groupes COOH, NH₂, OH, époxyde, nitrile, anhydride ou trialcoxysilane, de préférence de groupes COOH ou anhydride.

La couche comprenant une résine polymère comprenant au moins un nanotube lié de façon covalente au polymère de la conduite flexible sous marine peut également comprendre des additifs, tels que : des antioxydants, des plastifiants et toutes autres charges comme par exemple du noir de carbone.

Dans un mode de réalisation, le au moins un nanotube de la couche de la conduite flexible sous marine comprend un composé chimique.

Comme expliqué ci-dessus, un nanotube alumino- ou magnésio-silicate comporte un feuillet tubulaire externe dans lequel se situe un feuillet tubulaire interne. Or, le feuillet tubulaire externe a un potentiel zéta négatif alors que le feuillet tubulaire interne a un potentiel zéta positif. La charge positive de la cavité interne du feuillet tubulaire interne (lumen) favorise l'insertion de composés chimiques chargés négativement, ceux-ci étant repoussés par le feuillet tubulaire externe chargé négativement. Le composé chimique peut donc être avantageusement inséré dans la cavité interne du feuillet interne ou le composé chimique peut également être inséré entre les feuillets interne et externe du nanotube. Les liaisons chimiques entre le composé chimique et le nanotube sont généralement des liaisons ioniques, hydrogène ou de Van der Waals. Des méthodes de préparation de nanotube en alumino- ou magnésio-silicate comprenant des composés chimiques sont connues dans la littérature, par exemple de J. Phys. Chem. C 2008, 112, p. 958-964 ; ACS NANO vol 2, n°5 p. 814-820, US 5,651,976 et US 5,705,191.

Ainsi, un ou plusieurs composé(s) chimique(s) peu(ven)t être inséré(s) dans le(s) nanotube(s) de la couche de la conduite flexible selon l'invention. L'ajout d'un tel composé chimique permet de faire varier les propriétés physiques et/ou chimiques de la couche, et donc de la conduite. Par exemple, le composé chimique peut être :
- un agent anti-corrosion, tel que l'hexamine, le benzotriazole, la phénylènediamine, la diméthyléthanolamine, le cinnamaldéhyde, l'acide ascorbique, et/ou
- un capteur (« scavenger » en anglais) de CO₂ (par exemple une alcanolamine, telles que la monoéthanolamine, la triéthanolamine ou la disopropanolamine), de H₂S (par exemple la triazine ou un de ses dérivés, tels que l'hexahydrotriazine, ou un mélange de chlorure de zinc et acide polyphénolique, un condensat d'aldéhyde et alcanolamine), d'O₂ (par exemple l'hydrazine, la hydroquinone, le triméthylpyrrole, l'érythorbate, la diéthylhydroxylamine, le carbohydrazide) et/ou de CH₄, ces gaz étant typiquement relargués lors du transport d'hydrocarbures, et/ou
- un agent antioxydant, tel qu'un thiol ou un de ses dérivés (notamment un thioester), un dérivé phénolique (notamment le 2,4-di-tert butylphénol), une HALS ("Hindered Amine Light Stabilizers", dérivé de la 2,2,6,6-tétraméthylpipéridine), un phosphite (notamment le di-tert-butylphénylphosphite).

Lorsque la conduite flexible est utilisée pour le transport de fluide, ce composé chimique peut rester à l'intérieur de la cavité interne du nanotube ou être relargué.

La couche comprenant une résine polymère comprenant au moins un nanotube alumino- ou magnésiosilicate lié de façon covalente au polymère peut notamment être la gaine polymérique interne d'étanchéité dans une conduite flexible sous marine telle que définie ci-dessus, mais elle peut aussi être une couche intermédiaire située entre deux autres couches, notamment une couche adhésive utilisée entre deux couches.

La conduite flexible sous marine selon l'invention comprend une pluralité de couches, c'est-à-dire au moins deux couches. Dans un mode de réalisation, la conduite flexible sous marine comprend, en plus de la couche comprenant une résine polymère comprenant au moins un nanotube alumino- ou magnésio-silicate lié chimiquement au polymère par liaison covalente, une ou plusieurs des couches suivantes :
- une gaine polymérique externe, et/ou
- au moins une nappe d'armure de traction, et/ou
- éventuellement une voûte de pression, et/ou
- éventuellement une carcasse métallique.

Selon un deuxième objet, l'invention concerne un procédé de préparation de la conduite flexible sous marine précitée, comprenant les étapes suivantes :
a) mélange d'un polymère et d'au moins un nanotube alumino- ou magnésiosilicate porteur d'au moins un groupement A susceptible de former une liaison covalente avec ledit polymère,
b) extrusion pour former une couche comprenant ladite résine,
c) assemblage de la couche obtenue à l'étape b) avec au moins une autre couche.

L'avantage des nanotubes alumino- ou magnésio-silicate est que ce sont des nanoparticules discrètes, qui ne s'agrègent pas ou peu les uns aux autres comme le font les feuillets d'argile tels que mis en oeuvre dans la couche de résine polymère décrite dans WO 2008/113362. Ainsi, l'étape de formation de la résine polymère du procédé de préparation selon l'invention est généralement exempte d'étape d'exfoliation, et peut être réalisée dans les conditions usuelles de formation d'une résine polymère quelconque. Le procédé de préparation est donc simple et le coût de préparation de la couche de résine de polymère, et donc de la conduite flexible, est réduit.

Le polymère mis en oeuvre dans le procédé est tel que défini ci-dessus.

Généralement, le au moins un groupement A susceptible de former une liaison covalente avec ledit polymère est un substituant du feuillet tubulaire externe du nanotube, dont la structure chimique est proche de SiO₂. Typiquement, le au moins un groupement A est un substituant d'un des atomes de silicium du feuillet tubulaire externe, comme par exemple représenté en figure 2.

Ledit groupement A susceptible de former une liaison covalente avec ledit polymère est généralement soit:
- un groupe G choisi parmi :
   - un groupe choisi parmi un halogène, -OH, -COOH, -NH₂, -SH, -OSi(R₇)(R₈)(R₉) et un alcoxyle, et
   - une chaîne hydrocarbonée linéaire, ramifiée ou cyclique, saturée, insaturée ou aromatique, substituée par un ou plusieurs groupes choisis parmi Hal, -CO-Hal,-OCO-Hal, -SO₂-Hal, -COOH, -OH, -SH, -CN, -NCO, -OSi(R₇)(R₈)(R₉), -CR₁R₂-Hal, -NR₁H, 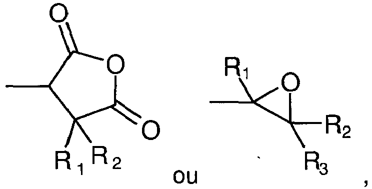 où :
   - R₇, R₈ et R₉ représentent indépendamment OH, un alkyle ou un alcoxyle,
   - R₁, R₂ et R₃ représentent indépendamment H ou une chaîne hydrocarbonée linéaire, ramifiée ou cyclique, saturée, insaturée ou aromatique, elle même éventuellement substituée par un ou plusieurs des groupes choisis parmi un halogène ou un groupe -CO-Hal, -OCO-Hal, -SO₂-Hal, -COOR₄, -COR₄, -CR₄R₅-Hal, -OR₄, -SR₄, -NR₄R₅, NR₄COR₅, -COR₄NR₅, -NR₄-CO-NR₅R₆, -O-CO-NR₄, -NR₄-CO-OR₅, -CN, -NO₂, -NCO, 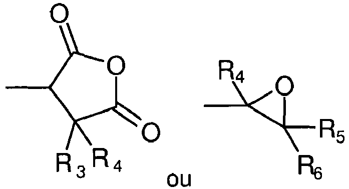 où R₄, R₅ et R₆ représentent indépendamment H ou une chaîne hydrocarbonée linéaire, ramifiée ou cyclique, saturée, insaturée ou aromatique,
   - Hal représente un halogène choisi parmi le chlore, le brome et l'iode,
- ou soit un groupe -O-POSS, où POSS est un silsesquioxane oligomérique polyédrique :
   - de formule (RSiO_{1,5})ₓ où :
      - x représente un nombre entier supérieur ou égal à 6 et inférieur ou égal à 12, x représentant le degré de polymérisation, et
      - R représente :
         - un groupe G tel que défini ci-dessus, ou
         - une chaîne hydrocarbonée linéaire, ramifiée ou cyclique, saturée, insaturée ou aromatique,
      étant entendu que les groupes R de chaque groupe RSiO_{1,5} peuvent être identiques ou différents les uns des autres et qu'au moins un groupe R représente un groupe G, ou
   - de formule [(RSiO_{1,5})_{x'}(XRSiO_{1,0})_{x"}], où :
   - x' et x" représentent indépendamment l'un de l'autre un nombre entier avec x" différent de 0, tel que la somme de x' et de x" soit supérieure ou égale à 6 et inférieure ou égale à 12, et
   - R est tel que défini ci-dessus, et
   - X représente un groupe G tel que défini ci-dessus, les groupes X de chaque groupe XRSiO_{1,0} pouvant être identiques ou différents les uns des autres et identiques à ou différents des R,
étant entendu que des groupes A adjacents peuvent être liés l'un à l'autre par un POSS.

Ainsi, ledit groupement A est généralement choisi parmi un groupe G et un O-POSS, le POSS étant de formule (RSiO_{1,5})ₓ ou [(RSiO_{1,5})_{x'}(XRSiO_{1,0})_{x"}]. Le groupe G est susceptible de former une liaison covalente avec le polymère. Le groupement A doit donc comprendre un groupe G. Ainsi, au moins un groupe R et/ou X des formules (RSiO_{1,5})ₓ et [(RSiO_{1,5})_{x'}(XRSiO_{1,0})_{x"}] représente un groupe G.

Un POSS de formule (RSiO_{1,5})ₓ a une structure sous forme de « cage » comportant des atomes de silicium et d'oxygène, et où chaque atome de silicium porte un substituant R. Ces POSS peuvent par exemple avoir une des structures suivantes :

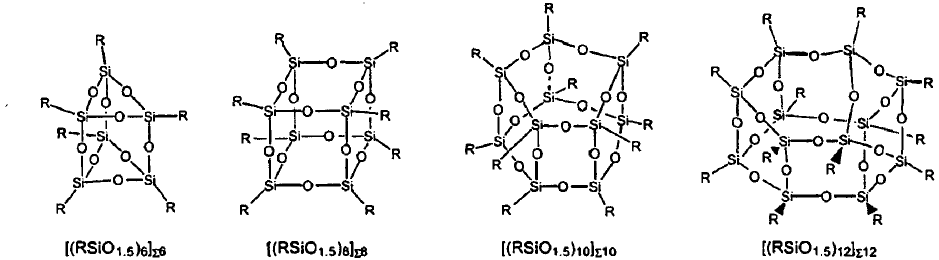

Un POSS de formule [(RSiO_{1,5})_{x'}(XRSiO_{1,0})_{x"}] est un POSS dans lesquels certaines des fonctions Si-O-Si sont rompues (« cage » partiellement ouverte) comme illustré sur le schéma ci-dessous. Les atomes de silicium situés au niveau de l'ouverture de la cage sont substitués par des groupements R et X. Les atomes de silicium de la cage sont substitués par des groupements R.

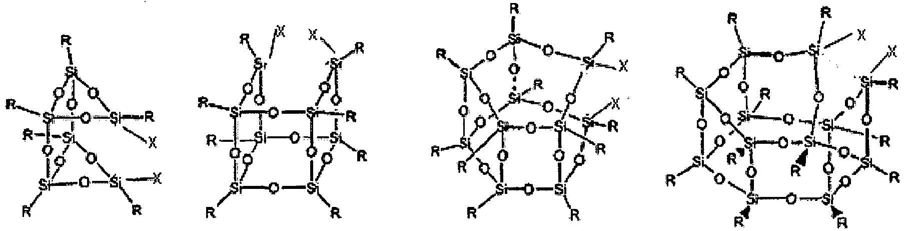

Par exemple, le schéma suivant représente des POSS de formule [(RSiO_{1,5})_{x'}(XRSiO_{1,0})_{x"}] dans lesquels une fonction Si-O-Si est sous forme hydrolysée (X représente OH).

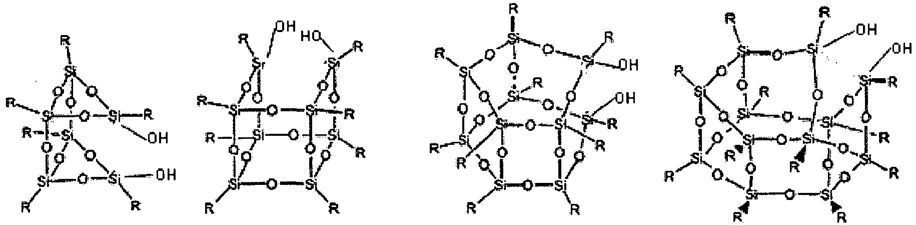

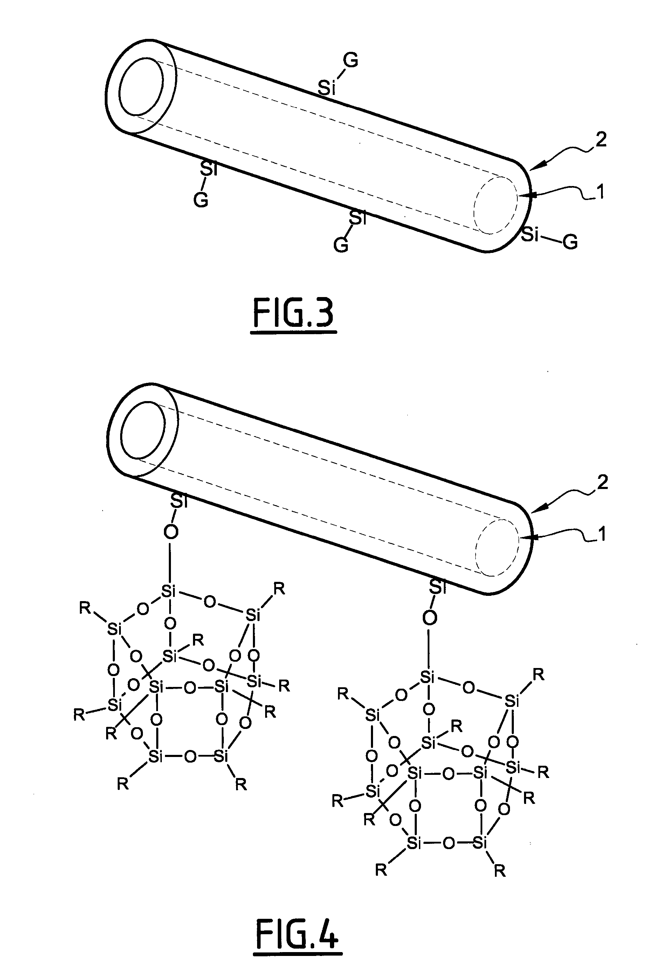

Ainsi, le nanotube de la couche de la conduite flexible selon l'invention peut par exemple avoir une des structures représentées en figures 3 et 4 annexées. Sur la figure 4, la structure du POSS représentée est simplement illustrative : le POSS peut avoir toute structure répondant à l'une des formules (RSiO_{1,5})ₓ ou [(RSiO_{1,5})_{x'}(XRSiO_{1,0})_{x"}].

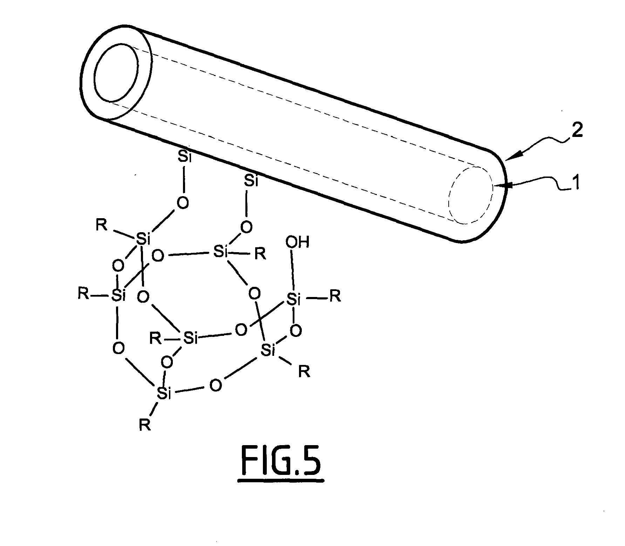

Deux groupes A adjacents peuvent être liés l'un à l'autre par un POSS. Par exemple, le au moins un nanotube de la couche de la conduite flexible peut avoir la structure représentée sur la figure 5 annexée.

De préférence, le groupement A susceptible de former une liaison covalente avec ledit polymère est choisi parmi :
- un groupe G' choisi parmi un alcoxyle, -OH et -OSi(R₇)(R₈)(R₉), où R₇, R₈ et R₉ représentent indépendamment OH, un alkyle ou un alcoxyle,
   et
- un groupe O-POSS, où POSS est :
   - de formule (R'SiO_{1,5})ₓ où x représente un nombre entier supérieur ou égal à 6 et inférieur ou égal à 12, et où R' représente :
      - un groupe G' tel que défini ci-dessus, ou
      - une chaîne hydrocarbonée linéaire, ramifiée ou cyclique, saturée, insaturée ou aromatique,
      étant entendu que les groupes R' de chaque groupe R'SiO_{1,5} peuvent être identiques ou différents les uns des autres et qu'au moins un groupe R' représente un groupe G', ou
   - de formule [(R'SiO_{1,5})_{x'}(G'R'SiO_{1,0})_{x"}], où :
      - x' et x" représentent indépendamment l'un de l'autre un nombre entier, tel que la somme de x' et de x" soit supérieure ou égale à 6 et inférieure ou égale à 12, et
      - R' est tel que défini ci-dessus, et
      - les groupes G' de chaque groupe G'R'SiO_{1,0} peuvent être identiques ou différents les uns des autres et identiques ou différents des R'.

Sont particulièrement préférés les groupements A choisi parmi les groupes G tels que définis ci-dessus, et notamment parmi les groupes G' tels que définis ci-dessus.

Au sens de la présente demande, un halogène est choisi parmi un fluor, un brome, un iode et un chlore, notamment un brome, un iode et un chlore, de préférence un chlore.

Une chaîne hydrocarbonée comprend de préférence de 1 à 10 atomes de carbone, notamment de 2 à 6 atomes de carbone. Les chaînes hydrocarbonées préférées sont les groupes alkyle (ayant de préférence de 1 à 10 atomes de carbone, en particulier de 2 à 6), alcényle (ayant de préférence de 2 à 10 atomes de carbone, en particulier de 2 à 6), aryle (ayant de préférence de 6 à 10 atomes de carbone), arylalkyle (ayant de préférence de 7 à 10 atomes de carbone) ou alkylaryle (ayant de préférence de 7 à 10 atomes de carbone). Le groupe vinylique est le groupe alcényle préféré. Le groupe phényle est l'aryle préféré.

Les groupes alkyle ont de préférence de 1 à 10 atomes de carbone, en particulier de 2 à 6. Un groupe alcoxyle est un groupe -O-alkyle.

Lors de l'étape a), au moins une liaison covalente est formée entre le polymère et le nanotube.

A titre illustratif, un groupement A porteur d'une fonction :
- halogène peut former une liaison amine avec une fonction amine du polymère (par substitution nucléophile), notamment lorsque le polymère est un polyamide,
- hydroxyle peut former une liaison ester avec une fonction acide carboxylique du polymère, notamment lorsque le polymère est un polyamide ou lorsque le polymère est un PVDF comportant des chaînes latérales comprenant des groupes COOH et/ou anhydride, ou peut former une liaison siloxane avec un groupement trialcoxysilane du polymère, notamment lorsque le polymère est un polyéthylène comportant des chaînes latérales porteuses de groupes trialcoxysilane, par exemple de type Crossflex,
- thiol peut former une liaison thioester avec une fonction acide carboxylique du polymère, notamment lorsque le polymère est un polyamide ou lorsque le polymère est un PVDF comportant des chaînes latérales comprenant des groupes COOH et/ou anhydride,
- époxyde peut former une liaison ester avec une fonction acide carboxylique du polymère et/ou une liaison amine avec une fonction amine du polymère, notamment lorsque le polymère est un polyamide,
- amine peut former une liaison amide avec une fonction acide carboxylique du polymère, notamment lorsque le polymère est un polyamide ou lorsque le polymère est un PVDF comportant des chaînes latérales comprenant des groupes COOH et/ou anhydride,
- acide carboxylique, chlorure d'acyle ou anhydride peut former une liaison amide avec une fonction amine du polymère, notamment lorsque le polymère est un polyamide,
- isocyanate peut former une liaison urée avec une fonction amine du polymère, notamment lorsque le polymère est un polyamide,
- chloroformiate peut former une liaison carbamate avec une fonction amine du polymère, notamment lorsque le polymère est un polyamide,
- chlorure de sulfonyle peut former une liaison sulfonamide avec la fonction amine du polymère, notamment lorsque le polymère est un polyamide,
- alcoxyle peut former une liaison siloxane avec un groupement trialcoxysilane du polymère, notamment lorsque le polymère est un polyéthylène comportant des chaînes latérales porteuses de groupes trialcoxysilane, par exemple de type Crossflex^{®},
- -OSi(R₇)(R₈)(R₉) où R₇, R₈ et R₉ représentent indépendamment OH ou un alcoxyle peut former une liaison siloxane avec un groupe trialcoxysilane du polymère, notamment lorsque le polymère est un polyéthylène comportant des chaînes latérales porteuses de groupes ou trialcoxysilane, par exemple de type Crossflex.

Les modes de réalisations suivants sont particulièrement préférés pour l'étape a):
- le polymère est un polyamide comprenant éventuellement des chaînes latérales fonctionnelles et le au moins un nanotube est porteur d'au moins un groupe -OH, NH₂ ou COOH, (ce par quoi des liaisons ester ou amide sont typiquement formées lors du procédé),
- le polymère est un polyéthylène comportant des chaînes latérales fonctionnelles porteuses de groupes de formule -Si-(OR₁₀)(OR₁₁)(OR₁₂), où R₁₀, R₁₁ et R₁₂ sont indépendamment des groupes alkyle, de préférence un polymère crossflex, et le au moins un nanotube est porteur d'au moins un groupe -OH, -OSi(R₇)(R₈)(R₉) ou alcoxyle où R₇, R₈ et R₉ représentent indépendamment OH, un alkyle ou un alcoxyle, (ce par quoi des liaisons de type siloxane sont typiquement formées lors du procédé),
- le polymère est un polyfluorure de vinylidène (PVDF) comportant des chaînes latérales fonctionnelles porteuses de groupes COOH ou anhydride, et le au moins un nanotube est porteur d'au moins un groupe -OH, ce par quoi des liaisons ester sont typiquement formées lors du procédé).

A titre illustratif est représentée dans le schéma 1 ci-dessous la réaction entre un PVDF comportant des chaînes latérales fonctionnelles porteuses de groupes anhydride avec un nanotube porteur de groupe -OH (A représente -OH). Une liaison covalente de type ester est alors formée entre le nanotube et le polymère lors du procédé selon l'invention.

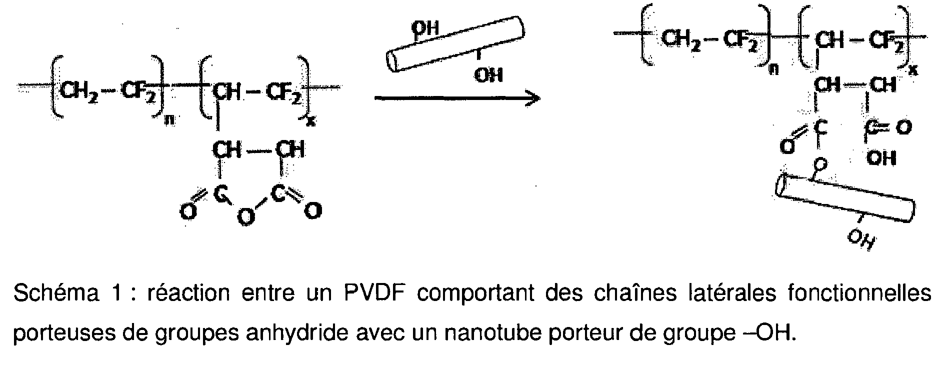

Dans un mode de réalisation préféré, la liaison covalente susceptible d'être formée entre le groupement A porté par le nanotube alumino- ou magnésiosilicate et le polymère est une liaison siloxane. Généralement, dans ce mode de réalisation, et en particulier lorsque le polymère est un polyéthylène comportant des chaînes latérales porteuses de groupes trialcoxysilane, par exemple de type Crossflex^{®} et que le groupement A est porteur d'une fonction hydroxyle, alcoxyle ou trialcoxysilane (notamment -OSi(R₇)(R₈)(R₉) où R₇, R₈ et R₉ sont tels que définis ci-dessus), le procédé comprend une étape ultérieure d) de réticulation de l'assemblage obtenu lors de l'étape c). Cette réticulation est généralement réalisée en mettant le dit assemblage en présence d'eau (ou d'humidité) à des températures élevées, notamment de 85 à 99°C, de préférence de 95 à 98°C, par exemple par immersion dans l'eau chaude ou par circulation d'eau chaude. La durée de l'étape d) de réticulation est variable, et dépend notamment de l'épaisseur de la couche comprenant la résine polymère comprenant les nanotubes alumino- ou magnésio-silicate.

Le mélange de l'étape a) peut notamment être réalisé par mélange à l'état fondu du polymère (« melt mixing » en anglais), par compoundage, par extrusion, par extrusion réactive (c'est-à-dire en réalisant les étapes a) et b) simultanément). Excepté lorsque l'étape a) est réalisée par extrusion réactive, le mélange de l'étape a) peut être utilisé soit en mélange maître soit en matrice principale pour former la couche comprenant la résine polymère.

La résine polymère peut être réalisée en utilisant le matériel usuel de préparation d'une résine polymère. En particulier, aucune adaptation de la température lors du compoundage, de cisaillement spécifique ou d'étape d'exfoliation n'est nécessaire lors de l'étape a) selon l'invention, au contraire du procédé tel que décrit dans WO 2008/113362. Typiquement, l'étape a) (et donc le procédé selon l'invention), est exempt d'étape d'exfoliation.

Généralement, dans l'étape a) du procédé, lorsque le mélange du polymère et du au moins un nanotube constitue la matrice principale, 1 à 10% en poids, de préférence 2 à 5% en poids, de nanotubes sont utilisés par rapport au poids total du mélange. Lorsque le mélange du polymère et de nanotubes est utilisé comme mélange maître, le pourcentage massique de nanotubes dans la résine polymère peut atteindre 30% voire 50%.

Lors de l'étape a) du procédé, des additifs peuvent être ajoutés, en particulier ceux susmentionnés.

Le procédé peut comprendre une étape de couplage chimique pour former une liaison covalente entre ledit groupement et les fonctions du polymère.

Cette étape de couplage chimique peut notamment être une hydrolyse, notamment une hydrolyse acide. Par exemple :
- si le polymère est un polyéthylène comportant des chaînes latérales porteuses de groupe trialcoxysilane, de préférence de formule -CH₂-CH₂-Si-(OR₁₀)(OR₁₁)(OR₁₂), une hydrolyse permet d'hydrolyser le groupe trialcoxysilane en groupe silanol, apte à se lier à au moins un groupe hydroxyle porté par un nanotube par formation d'une liaison siloxane (Si-O-Si),
- si le polymère est un polyéthylène comportant des chaînes latérales porteuses de groupe trialcoxysilane, de préférence de formule -CH₂-CH₂-Si-(OR₁₀)(OR₁₁)(OR₁₂), une hydrolyse permet d'hydrolyser le groupe trialcoxysilane en groupe silanol et si le nanotube comporte au moins un groupe trialcoxysilane hydrolysable en groupe silanol, les groupes silanol ainsi formées sur le nanotube et le polymère peuvent se condenser entre eux par formation d'une liaison siloxane,
- si le polymère est un polyéthylène comportant des chaînes latérales porteuses de groupe trialcoxysilane, de préférence de formule -CH₂-CH₂-Si-(OR₁₀)(OR₁₁)(OR₁₂), une hydrolyse permet d'hydrolyser le groupe trialcoxysilane en groupe silanol et si le nanotube comporte au moins un groupe alcoxyle hydrolysable en groupe silanol (le groupe alcoxyle étant porté par un atome de silicium du feuillet externe du nanotube), les groupes silanol sur le nanotube et le polymère peuvent se condenser entre eux par formation d'une liaison siloxane.

L'étape de couplage chimique peut être catalysée, notamment par la chaleur, des radiations et/ou un catalyseur.

Par exemple, si le polymère est porteur d'une fonction acide carboxylique, la réaction d'estérification entre la fonction hydroxyle portée par un nanotube et la fonction acide carboxylique d'un polymère peut être catalysée par une base. Il est à la portée de l'homme du métier d'adapter les conditions du couplage chimique (température, pression, utilisation d'un catalyseur, durée de réaction) pour permettre la création de la liaison covalente.

Dans un autre exemple, les étapes d'hydrolyses de groupes alcoxysilane ou trialcoxysilane en groupes silanol susmentionnées lorsque le nanotube porte au moins un groupe trialcoxysilane ou alcoxyle et/ou que le polymère comporte des groupes trialcoxysilane peuvent être catalysées par un acide. De même, l'étape de condensation entre le nanotube et le polymère pour former une liaison siloxane peut être catalysée par un acide, voire par un acide et par la chaleur.

Le procédé selon l'invention peut également comprendre préalablement ou simultanément à l'étape a) une étape de préparation d'un nanotube alumino- ou magnésiosilicate porteur d'au moins un groupement A tel que défini ci-dessus, par exemple par greffage d'un groupe porteur d'au moins un groupement A tel que défini ci-dessus sur un nanotube alumino- ou magnésiosilicate commercial (qui est généralement porteur de groupes -Si-OH, la fonction hydroxylé pouvant être greffée par un groupe porteur d'au moins un groupement A tel que défini ci-dessus par des méthodes connues de l'homme du métier, notamment décrites dans « *Comprehensive Organic Transformations: A Guide to Functional Group Preparations* » de R.C. Larock, publié par John Wiley & Sons Inc.).

Le polymère peut également être préparé lors de l'étape a).

Ainsi, dans un premier mode de réalisation, lorsque le polymère est un polymère polyéthylène comportant des chaînes latérales de formule -CH₂-CH₂-Si-(OR₁₀)(OR₁₁)(OR₁₂) où R₁₀, R₁₁ et R₁₂ sont tels que définis ci-dessus, l'étape a) peut comporter les étapes suivantes :
a₁) fondre un polymère polyéthylène,
a₂) ajouter un dérivé vinylsilane de formule CH₂=CH-Si-(OR₁₀)(OR₁₁)(OR₁₂), un initiateur peroxyde et au moins un nanotube alumino- ou magnésio-silicate porteur d'un groupe hydroxyle, trialcoxysilane ou alcoxyle pour obtenir un polyéthylène comportant des chaînes latérales fonctionnelles,
a₃) mélanger avec du polyéthylène, un catalyseur de la réaction de réticulation, éventuellement un antioxydant et/ou un stabilisateur,
étant entendu que les étapes a₂, a₃ et b) peuvent être effectuées simultanément.

L'initiateur peroxyde peut notamment être du péroxyde de dicumyl ou du 1,1-(t-butylpéroxy) 3,3,5-trimethylcyclohexane (Lupersol L231).

Le catalyseur de la réaction de réticulation peut notamment être du laurate de dibutyl étain (DBTL) ou du laurate de dioctyl étain (DOTL).

L'antioxydant peut notamment être un composé phénolique encombré, tel que les composés Irganox^{®} (Ciba-BASF) ou Hostanox^{®} (Clariant).

Le stabilisateur peut notamment être un photostabilisant amine encombrée (HALS - « hindered amine light stabilizer »), tel que chimassorb^{®}, Tinuvin^{®} ou irgastab^{®} (Ciba-BASF).

Le mélange de polyéthylène, du catalyseur de la réaction de réticulation, de l'antioxydant et du stabilisateur est un mélange maître pour le polyéthylène comportant des chaînes latérales de formule -CH₂-CH₂-Si-(OR₁₀)(OR₁₁)(OR₁₂).

Les nanotubes porteurs d'au moins un groupe hydroxyle, trialcoxysilane ou alcoxyle sont préférentiellement ajoutés lors de l'étape a2), simultanément ou séparément au dérivé vinylsilane. En effet, on préfère généralement éviter l'ajout de nanotube lors de l'étape a3) pour éviter une réaction chimique entre le catalyseur de la réaction de réticulation et le nanotube et donc leurs dégradations.

Les étapes a₁), a₂) et a₃) sont alors suivies de l'étape b) (extrusion), c) (assemblage avec d'autres couches) et d) (réticulation) telles que définies ci-dessus.

L'étape d) comprend alors l'étape d'hydrolyse susmentionnée permettant la formation des liaisons siloxane.

Ce premier mode de réalisation peut également comprendre préalablement à l'étape a₂) une étape de préparation d'un nanotube alumino- ou magnésiosilicate porteur d'au moins un groupement A tel que défini ci-dessus.

Dans un second mode de réalisation, à la fois le polymère et le au moins un nanotube alumino- ou magnésio-silicate porteur d'un groupe hydroxyle, trialcoxysilane ou alcoxyle sont formés lors de l'étape a).

Typiquement, lorsque le polymère est un polymère polyéthylène comportant des chaînes latérales de formule -CH₂-CH₂-Si-(OR₁₀)(OR₁₁)(OR₁₂) où R₁₀, R₁₁ et R₁₂ sont tels que définis ci-dessus, l'étape a) peut comporter les étapes suivantes :
a₁) fondre un polymère polyéthylène,
a₂) ajouter un dérivé vinylsilane de formule CH₂=CH-Si-(OR₁₀)(OR₁₁)(OR₁₂), un initiateur peroxyde et au moins un nanotube alumino- ou magnésio-silicate porteur d'un groupe hydroxyle pour obtenir un polyéthylène comportant des chaînes latérales fonctionnelles,
a₃) mélanger avec du polyéthylène, un catalyseur de la réaction de réticulation, éventuellement un antioxydant et/ou un stabilisateur,
étant entendu que les étapes a₂, a₃ et b) peuvent être effectuées simultanément.

Lors de l'étape a₂) sont formés 1) au moins un nanotube alumino- ou magnésio-silicate porteur d'un groupe -O-Si-(OR'₁₁)(OR'₁₂)-CH=CH₂ où R'₁₁ et R'₁₂ correspondent à R₁₀, R₁₁ ou R₁₂(réaction entre le vinylsilane et le nanotube) et 2) un polymère polyéthylène comportant des chaînes latérales de formule -CH₂-CH₂-Si-(OR₁₀)(OR₁₁)(OR₁₂) (réaction entre le polymère polyéthylène et le nanotube).

Les étapes a₁), a₂) et a₃) sont alors suivies de l'étape b) (extrusion), c) (assemblage avec d'autres couches) et d) (réticulation) telles que définies ci-dessus.

L'étape d) comprend alors l'étape d'hydrolyse susmentionnée permettant la formation des liaisons siloxane par condensation du groupe -O-Si-(OR'₁₁)(OR'₁₂)-CH=CH₂ porté par le au moins nanotube alumino- ou magnésio-silicate et des chaînes latérales de formule -CH₂-CH₂-Si-(OR₁₀)(OR₁₁)(OR₁₂) du polymère polyéthylène.

Toutefois, dans ce second mode de réalisation, lors de l'étape a₂), il y a compétition entre les deux réactions 1) et 2), et cette étape a₂) est donc généralement plus difficile à contrôler que l'étape a₂) du premier mode de réalisation ci-dessus. Par conséquent, lorsque l'on souhaite que le procédé inclut à la fois la préparation du polymère et le au moins un nanotube alumino- ou magnésio-silicate porteur d'un groupe hydroxyle, trialcoxysilane ou alcoxyle, le premier mode de réalisation ci-dessus comprenant préalablement à l'étape a₂) une étape de préparation d'un nanotube alumino-ou magnésiosilicate porteur d'au moins un groupement A tel que défini ci-dessus, est préféré.

Lorsque le nanotube comprend un composé chimique (agent anti-corrosion, capteur de CO₂, de H₂S, d'O₂ et/ou de CH₄ ou agent compatibilisant), l'étape a) est réalisée comme exposé ci-dessus, en remplaçant le nanotube par un nanotube comprenant un composé chimique.

Lorsque le nanotube ne comprend qu'un groupement A susceptible de former une liaison covalente, un polymère comprenant un groupe fonctionnel modifié dont la masse moléculaire est augmentée est obtenu.

Lorsque le nanotube a deux groupements A susceptibles de former une liaison covalente, le nanotube peut réagir avec deux chaînes de polymère distinctes, ce qui permet d'augmenter la masse moléculaire du polymère obtenu.

Lorsque le nanotube a plus de trois groupements A susceptibles de former une liaison covalente, le nanotube peut réagir avec plus de trois chaînes de polymère distinctes, ce qui permet d'augmenter la masse moléculaire du polymère obtenu et de créer des points de réticulation.

Ainsi, plus le nanotube comprend de groupements A susceptibles de former une liaison covalente, plus la masse moléculaire du polymère augmente. Ainsi, on préfère utiliser des nanotubes comprenant deux, trois ou plus de trois groupements A lors de l'étape a). En effet, l'augmentation de la masse moléculaire et/ou du nombre de points de réticulation permet de diminuer la mobilité des chaînes de polymères les unes par rapport aux autres et ainsi d'obtenir un polymère ayant des propriétés thermomécaniques améliorées. Une conduite flexible sous marine comprenant un tel polymère est donc adaptée pour être utilisée pour le transport de fluides sous haute pression et haute température, notamment d'hydrocarbures.

L'étape b) d'extrusion peut être réalisée par toute méthode connue de l'homme du métier.

Généralement, la résine obtenue à la fin de l'étape a) est séchée, typiquement dans une étuve à une température supérieure à 70°C, généralement pendant plusieurs heures, par exemple quatre heures à 80°C, avant d'alimenter une extrudeuse mono-vis ou bi-vis. Il est également possible d'utiliser une extrudeuse réactive et dans ce cas les étapes a) et b) sont simultanées puisque le mélange entre le(s) nanotube(s) et le polymère et l'extrusion se font dans le même outillage, ou dans une co-extrudeuse permettant de réaliser une couche comprenant une résine polymère comprenant au moins un nanotube lié chimiquement de façon covalente au polymère.

La couche comprenant la résine obtenue à la fin de l'étape b) est typiquement tubulaire, a généralement un diamètre de 50 mm à 600 mm, de préférence de 50 à 400 mm, une épaisseur de 1 mm à 150 mm, préférentiellement de 40 à 100 mm et une longueur de 1 m à 10 km.

Le procédé comprend l'étape c) d'assemblage de la couche obtenue lors de l'étape b) avec au moins une autre couche pour former la conduite sous marine flexible, notamment avec une gaine polymérique externe, une nappe d'armure de traction, éventuellement une voûte de pression, et éventuellement une carcasse métallique.

Dans un mode de réalisation, l'extrusion du mélange obtenu à l'étape a) est réalisée sur une autre couche, typiquement la carcasse, pour obtenir un ensemble (carcasse / couche en résine polymère comprenant au moins un nanotube lié chimiquement au polymère de façon covalente) qui sera alors rapporté et calandré avec au moins une autre couche lors de l'étape c), typiquement une voûte de pression, des nappes d'armures de traction et une gaine polymérique externe. Ce mode de réalisation permet notamment de réaliser des conduites flexibles à passage non lisse (« Rough bore » en anglais).

Dans un autre mode de réalisation, l'extrusion du mélange obtenu à l'étape a) est indépendante et la couche obtenue à la fin de l'étape b) est alors rapportée et calandrée avec au moins une autre couche lors de l'étape c), typiquement une voûte de pression, des nappes d'armures de traction et une gaine polymérique externe. Ce mode de réalisation permet notamment de réaliser des conduites flexibles à passage lisse (« Smooth bore » en anglais)

Les couches sont assemblées pour former une conduite flexible sous marine de type non lié ("unbonded" en langue anglaise), telle que décrite dans les documents normatifs publiés par l'American Petroleum Institute (API), API 17J et API RP 17B.

La présence de nanotube lié de façon covalente au polymère dans une résine polymère utilisée comme couche de la conduite flexible sous marine selon l'invention présente, en plus de l'amélioration des propriétés thermomécaniques de la résine, les avantages suivants :
- les propriétés thermomécaniques de la résine peuvent être adaptées en fonction du pourcentage de nanotube introduit dans la résine et du nanotube utilisé, plus particulièrement en fonction de la nature de A et donc de la nature de la liaison avec le polymère (nature de la liaison covalente (ester, amide, sulfonamide, ...)), du nombre de groupement A susceptibles de former une liaison chimique avec le polymère,
- la résine est homogène car les nanotubes ne s'agrègent pas les uns aux autres,
- la résine peut être obtenue en utilisant les dispositifs et les techniques classiques de mélange et d'extrusion, sans qu'une étape d'exfoliation ne soit nécessaire,
- la structure des nanotubes est stable chimiquement et dans le temps,
- la reprise d'eau de la résine est diminuée car les nanotubes rendent la résine plus hydrophobe,
- le gonflement de la résine est diminué, et/ou
- l'allongement à la rupture de la résine est augmenté et la propagation de fissures dans la couche de résine est diminuée tout en maintenant, voire en améliorant, le module, la résistance à l'impact et la perméation.

Ces avantages permettent l'utilisation de la conduite flexible sous marine pour le transport de fluides. Ainsi, selon un troisième objet, l'invention a pour objet l'utilisation de la conduite flexible sous marine précitée pour le transport de fluides, notamment de gaz ou de liquides, de préférence d'hydrocarbures.

D'autres particularités et avantages de l'invention ressortiront à la lecture de la description faite ci-après de modes de réalisation particuliers de l'invention, donnés à titre indicatif mais non limitatif, en référence aux figures.
La figure 1 est une vue schématique partielle en perspective d'une conduite flexible selon l'invention.
Les figures 2, 3, 4 et 5 représentent des structures de nanotubes comprenant une fonction A susceptible de former une liaison covalente avec le polymère, chaque groupement A étant lié à un atome de silicium du feuillet externe du nanotube. Dans chacune de ces figures, 1 représente le feuillet interne, 2 le feuillet externe du nanotube. Dans la figure 2, A est un groupement susceptible de former une liaison covalente avec le polymère. Dans la figure 3, G est un groupement tel que défini ci-dessus. Dans la figure 4, le groupement susceptible de former une liaison covalente avec le polymère est un groupe -O-POSS de formule (RSiO_{1,5})₁₀, étant entendu qu'au moins un groupe R représente un groupe G tel que défini ci-dessus. Dans la figure 5, deux groupes A adjacents sont liés l'un à l'autre par un POSS de formule -[(-ORSiO_{1,0})(RSiO_{1,5})₄(HORSiO_{1,0})(O_{1,0}RSiO-)]-.
La Figure 1 illustre une conduite conforme à l'invention comprenant, de l'extérieur vers l'intérieur :
   - une gaine polymérique externe dite d'étanchéité 10 (appelée gaine externe),
   - une nappe externe d'armures de traction 12, une nappe interne d'armures de traction 14 enroulée en sens opposé de la nappe externe 12,
   - une voûte de pression 18 de reprise des efforts radiaux générés par la pression du fluide transporté,
   - une gaine polymérique interne dite d'étanchéité 20 comprenant une résine polymère comprenant au moins un nanotube alumino- ou magnésio-silicate selon l'invention, et
   - une carcasse interne 22 de reprise des efforts radiaux d'écrasement.

Du fait de la présence de la carcasse interne 22, cette conduite est dite à passage non lisse (" rough bore " en langue anglaise). L'invention pourrait aussi s'appliquer à une conduite dite à passage lisse (" smooth-bore " en langue anglaise), ne comportant pas de carcasse interne.

De même, on ne sortirait pas du champ de présente invention en supprimant la voûte de pression 18, sous réserve que les angles d'hélice des fils constituant les nappes d'armures 12, 14 soient proches de 55° et en sens opposé.

Les nappes d'armures 12, 14 sont obtenues par enroulement à pas long d'un ensemble de fils en matériau métallique ou composite, de section généralement sensiblement rectangulaire. L'invention s'appliquerait aussi si ces fils avaient une section de géométrie circulaire ou complexe, du type par exemple T autoagrafé. Sur la figure 1, seules deux nappes d'armures 12 et 14 sont représentées, mais la conduite pourrait aussi comporter une ou plusieurs paires supplémentaires d'armures. La nappe d'armures 12 est dite externe car elle est ici la dernière, en partant de l'intérieur de la conduite, avant la gaine d'étanchéité externe 10.

La conduite flexible peut également comprendre des couches non représentées sur la figure 1, telles que :
- une couche de maintien entre la gaine polymérique externe 10 et les nappes d'armures de traction 12 et 14, ou entre deux nappes d'armures de traction,
- une ou plusieurs couches anti-usure (" anti-wear layer " en anglais) en matériau polymérique en contact soit avec la face interne de la couche de maintien précitée, soit avec sa face externe, soit avec les deux faces, cette couche anti-usure permettant d'éviter que la couche de maintien s'use au contact avec des armures métalliques. Les couches anti-usure, qui sont bien connues de l'homme du métier, sont généralement réalisées par enroulement hélicoïdal d'un ou plusieurs rubans obtenus par extrusion d'un matériau polymérique à base de polyamide, de polyoléfines, ou de PVDF (" polyvinylidene fluoride " en anglais). On pourra aussi se reporter au document WO2006/120320 qui décrit des couches anti-usure constituées de rubans en polysulfone (PSU), polyethersulfone (PES), polyphenylsulfone (PPSU), polyetherimide (PEI), polytétrafluoroéthylène (PTFE), polyétheréthercétone (PEEK) ou polysulfure de phénylène (PPS).

## Revendications

1. Conduite flexible sous *marine destinée* au transport de fluides, *notamment* d'hydrocarbures, comprenant une pluralité de couches dont au moins une couche comprend une résine polymère comprenant au moins un nanotube alumino- ou magnésio-silicate lié chimiquement au polymère par liaison covalente.

2. Conduite flexible sous marine selon la revendication 1, dans laquelle le polymère et le au moins un nanotube alumino- ou magnésio-silicate sont liés par liaison de type ester, amide, amine, éther, thioéther, urée, imine, imide, sulfonamide, carbamate, phosphate, siloxane, silane ou carbone-carbone.

3. Conduite flexible sous marine selon l'une quelconque des revendications 1 à 2, dans laquelle le polymère est un polyamide comportant éventuellement des chaînes latérales fonctionnelles, un polyéthylène comportant des chaînes latérales fonctionnelles ou un polyfluorure de vinylidène comportant des chaînes latérales fonctionnelles.

4. Conduite flexible sous marine selon l'une quelconque des revendications 1 à 3, dans laquelle le au moins un nanotube comprend un composé chimique choisi parmi :
- un agent anti-corrosion, et/ou
- un capteur de CO₂, de H₂S, d'O₂ et/ou de CH₄, et/ou
- un agent antioxydant.

5. Conduite flexible sous marine selon l'une quelconque des revendications 1 à 4, comprenant, en plus de la couche comprenant une résine polymère comprenant au moins un nanotube alumino- ou magnésio-silicate lié chimiquement au polymère par liaison covalente, une ou plusieurs des couches suivantes :
- une gaine polymérique externe, et/ou
- au moins une nappe d'armure de traction, et/ou
- éventuellement une voûte de pression, et/ou
- éventuellement une carcasse métallique.

6. Procédé de préparation d'une conduite flexible sous marine selon l'une quelconque des revendications 1 à 5, comprenant les étapes suivantes :
a) mélange d'un polymère et d'au moins un nanotube alumino- ou magnésiosilicate porteur d'au moins un groupement A susceptible de former une liaison covalente avec ledit polymère,
b) extrusion pour former une couche comprenant ladite résine,
c) assemblage de la couche obtenue à l'étape b) avec au moins une autre couche.

7. Procédé selon la revendication 6, dans lequel ledit groupement A est:
- soit un groupe G choisi parmi :
- un groupe choisi parmi un halogène, -OH, -COOH, -NH₂, -SH, -OSi(R₇)(R₈)(R₉) et un alcoxyle, et
- une chaîne hydrocarbonée linéaire, ramifiée ou cyclique, saturée, insaturée ou aromatique, substituée par un ou plusieurs groupes choisis parmi Hal, -CO-Hal,-OCO-Hal, -SO₂-Hal, -COOH, -OH, -SH, -CN, -NCO, -OSi(R₇)(R₈)(R₉), -CR₁R₂-Hal, -NR₁H, 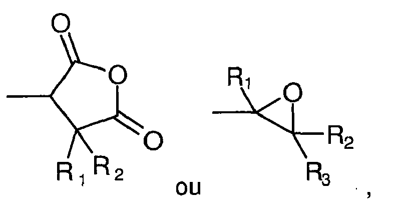 où :
- R₇, R₈ et R₉ représentent indépendamment OH, un alkyle ou un alcoxyle,
- R₁, R₂ et R₃ représentent indépendamment H ou une chaîne hydrocarbonée linéaire, ramifiée ou cyclique, saturée, insaturée ou aromatique, elle même éventuellement substituée par un ou plusieurs des groupes choisis parmi un halogène ou un groupe -CO-Hal, -OCO-Hal, -SO₂-Hal, -COOR₄, -COR₄, -CR₄R₅-Hal, -OR₄, -SR₄, -NR₄R₅, NR₄COR₅, -COR₄NR₅, -NR₄-CO-NR₅R₆, -O-CO-NR₄, -NR₄-CO-OR₅, -CN, -NO₂, -NCO, 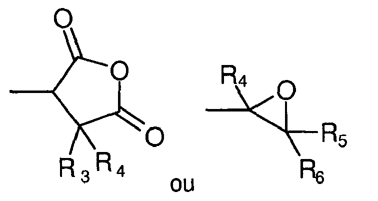 où R₄, R₅ et R₆ représentent indépendamment H ou une chaîne hydrocarbonée linéaire, ramifiée ou cyclique, saturée, insaturée ou aromatique,
- Hal représente un halogène choisi parmi le chlore, le brome et l'iode,
- soit un groupe -O-POSS, où POSS est un silsesquioxane oligomérique polyédrique :
- de formule (RSiO_{1,5})ₓ, où :
- x représente un nombre entier supérieur ou égal à 6 et inférieur ou égal à 12, et
- R représente :
- un groupe G tel que défini ci-dessus, ou
- une chaîne hydrocarbonée linéaire, ramifiée ou cyclique, saturée, insaturée ou aromatique,
étant entendu que les groupes R de chaque groupe RSiO_{1,5} peuvent être identiques ou différents les uns des autres et qu'au moins un groupe R représente un groupe G, ou
- de formule [(RSiO_{1,5})_{x'}(XRSiO_{1,0})_{x"}], où :
- x' et x" représentent indépendamment l'un de l'autre un nombre entier, tel que la somme de x' et de x" soit supérieure ou égale à 6 et inférieure ou égale à 12, et
- R est tel que défini ci-dessus, et
- X représente un groupe G tel que défini ci-dessus, les groupes X de chaque groupe XRSiO_{1,0} pouvant être identiques ou différents les uns des autres et identiques ou différents des R,
étant entendu que des groupes A adjacents peuvent être liés l'un à l'autre par un POSS.

8. Procédé selon la revendication 7, dans lequel ledit groupement A est choisi parmi :
- un groupe G' choisi parmi un alcoxyle, -OH et -OSi(R₇)(R₈)(R₉), où R₇, R₈ et R₉ représentent indépendamment OH, un alkyle ou un alcoxyle,
et
- un groupe O-POSS, où POSS est :
- de formule (R'SiO_{1,5})ₓ où x représente un nombre entier supérieur ou égal à 6 et inférieur ou égal à 12, et où R' représente :
- un groupe G' tel que défini ci-dessus, ou
- une chaîne hydrocarbonée linéaire, ramifiée ou cyclique, saturée, insaturée ou aromatique,
étant entendu que les groupes R' de chaque groupe R'SiO_{1,5} peuvent être identiques ou différents les uns des autres et qu'au moins un groupe R' représente un groupe G', ou
- de formule [(R'SiO_{1,5})_{x'}(G'R'SiO_{1,0})_{x"}], où :
- x' et x" représentent indépendamment l'un de l'autre un nombre entier avec x' différent de 0, tel que la somme de x' et de x" soit supérieure ou égale à 6 et inférieure ou égale à 12, et
- R' est tel que défini ci-dessus, et
- les groupes G' de chaque groupe G'R'SiO_{1,0} peuvent être identiques ou différents les uns des autres et identiques à ou différents des R'.

9. Procédé selon la revendication 8, dans lequel ledit groupement A est un groupe G' choisi parmi un alcoxyle, -OH et -OSi(R₇)(R₈)(R₉), où R₇, R₈ et R₉ représentent indépendamment OH, un alkyle ou un alcoxyle.

10. Procédé selon l'une quelconque des revendications 6 à 9, dans lequel :
- le polymère est un polyamide comprenant éventuellement des chaînes latérales fonctionnelles et le au moins un nanotube est porteur d'au moins un groupe -OH, NH₂ ou COOH,
- le polymère est un polyéthylène comportant des chaînes latérales fonctionnelles porteuses de groupes de formule -Si-(OR₁₀)(OR₁₁)(OR₁₂), où R₁₀, R₁₁ et R₁₂ sont indépendamment des groupes alkyle et le au moins un nanotube est porteur d'au moins un groupe -OH, -OSi(R₇)(R₈)(R₉) ou alcoxyle, où R₇, R₈ et R₉ représentent indépendamment OH, un alkyle ou un alcoxyle, ou
- le polymère est un polyfluorure de vinylidène comportant des chaînes latérales fonctionnelles porteuses de groupes COOH ou anhydride, et le au moins un nanotube est porteur d'au moins un groupe -OH.

11. Procédé selon l'une quelconque des revendications 6 à 10, comprenant une étape ultérieure d) de réticulation de l'assemblage obtenu lors de l'étape c) lorsque la liaison covalente susceptible d'être formée entre le groupement A porté par le nanotube alumino- ou magnésiosilicate et le polymère est une liaison siloxane.

12. Procédé selon l'une quelconque des revendications 6 à 11, de préparation d'une conduite flexible sous marine comprenant au moins une couche comprenant une résine polymère polyéthylène comportant des chaînes latérales de formule -CH₂-CH₂-Si-(OR₁₀)(OR₁₁)(OR₁₂) où R₁₀, R₁₁ et R₁₂ sont indépendamment des groupes alkyle, comprenant les étapes consistant à :
a₁) fondre un polymère polyéthylène,
a₂) ajouter un dérivé vinylsilane de formule CH₂=CH-Si-(OR₁₀)(OR₁₁)(OR₁₂), un initiateur peroxyde et au moins un nanotube alumino- ou magnésio-silicate porteur d'un groupe hydroxyle, trialcoxysilane ou alcoxyle pour obtenir un polyéthylène comportant des chaînes latérales fonctionnelles,
a₃) mélanger avec du polyéthylène, un catalyseur de la réaction de réticulation, éventuellement un antioxydant et/ou un stabilisateur,
b) extrusion pour former une couche comprenant ladite résine,
c) assemblage de la couche obtenue à l'étape b) avec au moins une autre couche,
d) réticulation de l'assemblage obtenu lors de l'étape c),
étant entendu que les étapes a₂, a₃ et b) peuvent être effectuées simultanément.

13. Utilisation d'une conduite flexible sous marine selon l'une quelconque des revendications 1 à 5 pour le transport de fluides.

14. Utilisation selon la revendication 13, pour le transport d'hydrocarbures.

## Patentansprüche

1. Flexible Unterwasserleitung für den Transport von Fluiden, insbesondere Kohlenwasserstoffe, umfassend eine Mehrzahl von Schichten, von denen mindestens eine Schicht ein Polymerharz umfasst, das mindestens ein Alumino- oder Magnesiumsilicat-Nanoröhrchen umfasst, welches an das Polymer durch kovalente Bindung chemisch gebunden ist.

2. Flexible Unterwasserleitung nach Anspruch 1, bei der das Polymer und das mindestens eine Alumino- oder Magnesiumsilicat-Nanoröhrchen durch Bindung des Typs Ester, Amid, Amin, Ether, Thioether, Harnstoff, Imin, Imid, Sulfonamid, Carbamat, Phosphat, Siloxan, Silan oder Kohlenstoff-Kohlenstoff gebunden sind.

3. Flexible Unterwasserleitung nach einem beliebigen der Ansprüche 1 bis 2, bei der das Polymer ein Polyamid, das gegebenenfalls funktionelle Seitenketten aufweist, ein Polyethylen, das funktionelle Seitenketten aufweist, oder ein Polyvinylidenfluorid, das funktionelle Seitenketten aufweist, ist.

4. Flexible Unterwasserleitung nach einem beliebigen der Ansprüche 1 bis 3, bei der das mindestens eine Nanoröhrchen eine chemische Verbindung umfasst, die ausgewählt ist aus:
- einem Antikorrosionsmittel, und/oder
- einem CO₂-, H₂S-, O₂- und/oder CH₄-Sensor, und/oder
- einem Antioxidationsmittel.

5. Flexible Unterwasserleitung nach einem beliebigen der Ansprüche 1 bis 4, umfassend zusätzlich zu der Schicht, die ein Polymerharz umfasst, das mindestens ein Alumino- oder Magnesiumsilicat-Nanoröhrchen umfasst, welches an das Polymer durch kovalente Bindung chemisch gebunden ist, eine oder mehrere der folgenden Schichten:
- eine äußere Polymerhülle und/oder
- mindestens eine Schicht aus Zugarmierungen und/oder
- gegebenenfalls ein Druckgewölbe und/oder
- gegebenenfalls eine Metallkarkasse.

6. Verfahren zum Herstellen einer flexiblen Unterwasserleitung nach einem beliebigen der Ansprüche 1 bis 5, folgende Schritte umfassend:
a) Mischung eines Polymers und mindestens eines Alumino- oder Magnesiumsilicat-Nanoröhrchens, das ein Träger mindestens einer Gruppe A ist, die geeignet ist, eine kovalente Bindung mit dem Polymer zu bilden,
b) Extrusion, um eine Schicht zu bilden, die das Harz umfasst,
c) Zusammensetzen der bei Schritt b) erhaltenen Schicht mit mindestens einer anderen Schicht.

7. Verfahren nach Anspruch 6, bei dem die Gruppe A ist:
entweder eine Gruppe G ausgewählt aus
- einer Gruppe, ausgewählt aus einem Halogen, -OH, -COOH, -NH₂, -SH, -OSi(R₇)(R₈)(R₉) und einem Alkoxyl und
- einer linearen, verzweigten oder cyclischen, gesättigten, ungesättigten oder aromatischen Kohlenwasserstoffkette, substituiert mit einer oder mehreren Gruppen ausgewählt aus Hal, -CO-Hal, -OCO-Hal, -SO₂-Hal, -COOH, -OH, -SH, -CN, -NCO, -OSi(R₇)(R₈)(R₉),-CR₁R₂-Hal, 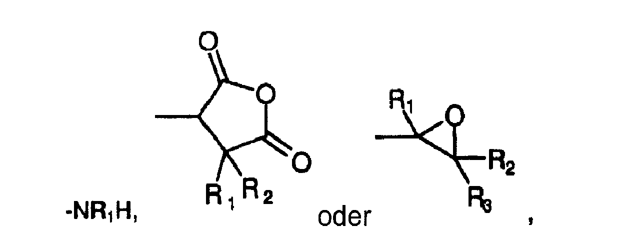
wobei:
- R₇, R₈ und R₉ unabhängig OH, ein Alkyl oder ein Alkoxyl repräsentieren,
- R₁, R₂ und R₃ unabhängig H oder eine lineare, verzweigte oder cyclische, gesättigte, ungesättigte oder aromatische Kohlenwasserstoffkette repräsentieren, wobei diese selbst gegebenenfalls mit einer oder mehreren der Gruppen substituiert ist, die ausgewählt sind aus einem Halogen oder einer Gruppe -CO-Hal, -OCO-Hal, -SO₂-Hal, -COOR₄, -COR₄, -CR₄R₅-Hal, -OR₄, -SR₄, -NR₄R₅, NR₄COR₅, -COR₄NR₅,-NR₄-CO-NR₅R₆, -O-CO-NR₄, -NR₄-CO-OR₅, -CN, - NO₂, -NCO, 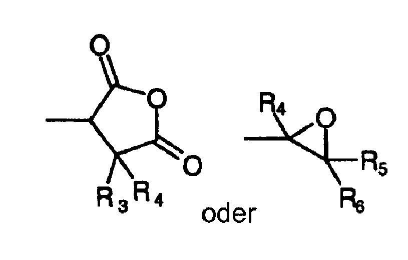 wobei R₄, R₅ und R₆ unabhängig H oder eine lineare, verzweigte oder cyclische, gesättigte, ungesättigte oder aromatische Kohlenwasserstoffkette repräsentieren,
- Hal ein Halogen, ausgewählt aus Chlor, Brom und lod darstellt,
oder eine Gruppe -O-POSS, wobei POSS ein polyedrisches oligomeres Silsesquioxan ist:
- der Formel (RSiO_{1,5})ₓ, wobei:
- x eine ganze Zahl größer oder gleich 6 und kleiner oder gleich 12 ist, und
- R darstellt:
- eine Gruppe G, wie sie oben definiert ist, oder
- eine lineare, verzweigte oder cyclische, gesättigte, ungesättigte oder aromatische Kohlenwasserstoffkette,
vorausgesetzt, dass die Gruppen R jeder Gruppe RSiO_{1,5} identisch oder unterschiedlich zueinander sein können und dass mindestens eine Gruppe R eine Gruppe G repräsentiert, oder
- der Formel [(RSiO_{1,5})_{x'}(XRSiO_{1,0})_{x"}], wobei:
- x' und x" unabhängig voneinander eine ganze Zahl repräsentieren, derart, dass die Summe von x' und x" größer oder gleich 6 undkleiner oder gleich 12 ist, und
- R so ist, wie oben definiert, und
- X eine Gruppe G repräsentiert, wie weiter oben definiert ist, die Gruppen X jeder Gruppe XRSiO_{1,0} identisch oder unterschiedlich zueinander und identisch oder unterschiedlich zu R sein können,
vorausgesetzt, dass die benachbarten Gruppen A durch ein POSS aneinander gebunden werden können.

8. Verfahren nach Anspruch 7, bei dem die Gruppe A ausgewählt ist aus:
- einer Gruppe G', ausgewählt aus einem Alkoxyl, -OH und-OSi(R₇)(R₈)(R₉), wobei R₇, R₈ und R₉ unabhängig OH, ein Alkyl oder ein Alkoxyl repräsentieren,
und
- einer Gruppe O-POSS, wobei POSS ist:
- der Formel (R'SiO_{1,5})ₓ, wobei x eine ganze Zahl größer oder gleich 6 und kleiner oder gleich 12 repräsentiert und wobei R' repräsentiert:
- eine Gruppe G', wie oben definiert, oder
- eine lineare, verzweigte oder cyclische, gesättigte, ungesättigte oder aromatische Kohlenwasserstoffkette,
vorausgesetzt, dass die Gruppen R' jeder Gruppe R'SiO_{1,5} identisch oder unterschiedlich zueinander sein können und dass mindestens eine Gruppe R' eine Gruppe G' repräsentiert, oder
- der Formel [(R'SiO_{1,5})_{x'}(G'R'SiO_{1,0})_{x"}], wobei:
- x' und x" unabhängig voneinander eine ganze Zahl mit x' ungleich 0 repräsentieren, derart, dass die Summe von x' und x" größer oder gleich 6 und kleiner oder gleich 12 ist, und
- R' so ist, wie oben definiert, und
- die Gruppen G' jeder Gruppe G'R'SiO_{1,0} identisch oder unterschiedlich zueinander und identisch zu oder unterschiedlich von R' sein können.

9. Verfahren nach Anspruch 8, bei dem die Gruppe A eine Gruppe G' ist, ausgewählt aus einem Alkoxyl, -OH und -OSi(R₇)(R₈)(R₉), wobei R₇, R₈ und R₉ unabhängig OH, ein Alkyl oder ein Alkoxyl repräsentieren.

10. Verfahren nach einem beliebigen der Ansprüche 6 bis 9, bei dem:
- das Polymer ein Polyamid ist, das gegebenenfalls funktionelle Seitenketten umfasst und das mindestens eine Nanoröhrchen ein Träger von mindestens einer Gruppe -OH, NH₂ oder COOH ist,
- das Polymer ein Polyethylen ist, das funktionelle Seitenketten mit Gruppen der Formel -Si-(OR₁₀)(OR₁₁)(OR₁₂) umfasst, wobei R₁₀, R₁₁ und R₁₂ unabhängig Alkylgruppen sind und das mindestens eine Nanoröhrchen Träger von mindestens einer Gruppe -OH,-OSi(R₇)(R₈)(R₉) oder Alcoxyl ist, wobei R₇, R₈ und R₉ unabhängig OH, ein Alkyl oder ein Alcoxyl darstellen, oder
- das Polymer ein Polyvinylidenfluorid ist, das funktionelle Seitenketten mit Gruppen COOH oder Anhydrid umfasst und das mindestens eine Nanoröhrchen Träger mindestens einer Gruppe -OH ist.

11. Verfahren nach einem beliebigen der Ansprüche 6 bis 10, umfassend einen nachfolgenden Schritt d), der Vernetzung der bei dem Schritt c) erhaltenen Anordnung, wenn die kovalente Bindung, die geeignet ist, zwischen der Gruppe A, die von dem Alumino- oder Magnesiumsilicat-Röhrchen getragen wird, und dem Polymer gebildet zu werden, eine Siloxanbindung ist.

12. Verfahren nach einem beliebigen der Ansprüche 6 bis 11 zur Herstellung einer flexiblen Unterwasserleitung, umfassend mindestens eine Schicht, die ein Polyethylenpolymerharz umfasst, das Seitenketten der Formel -CH₂-CH₂-Si-(OR₁₀)(OR₁₁)(OR₁₂) aufweist, wobei R₁₀, R₁₁ und R₁₂ unabhängig Alkylgruppen sind, umfassend die Schritte:
a₁) Schmelzen eines Polyethylenpolymers,
a₂) Hinzufügen eines Vinylsilanderivats der Formel CH₂=CH-Si-(OR₁₀)(OR₁₁)(OR₁₂), eines Peroxidinitiators und mindestens eines Alumino- oder Magnesiumsilicat-Nanoröhrchens, welches Träger einer Hydroxyl-, Trialkoxylsilan- oder Alkoxylgruppe ist, um ein Polyethylen zu erhalten, das funktionelle Seitenketten aufweist,
a₃) Mischen eines Katalysators der Vernetzungsreaktion, gegebenenfalls ein Antioxidationsmittel und/oder ein Stabilisator, mit dem Polyethylen,
b) Extrusion, um eine das Harz enthaltende Schicht zu bilden,
c) Zusammensetzen der bei Schritt b) erhaltenen Schicht mit mindestens einer anderen Schicht,
d) Vernetzung der Anordnung, die bei Schritt c) erhalten wird,
unter der Voraussetzung, dass die Schritte a₂, a₃ und b) gleichzeitig durchgeführt werden können.

13. Verwendung einer flexiblen Unterwasserleitung nach einem beliebigen der Ansprüche 1 bis 5 für den Transport von Fluiden.

14. Verwendung nach Anspruch 13 für den Transport von Kohlenwasser-stoffen.

## Claims

1. A flexible submarine pipe intended for transporting fluids, notably hydrocarbons, comprising a plurality of layers, at least one layer of which comprises a polymeric resin comprising at least one alumino-silicate or magnesium silicate nanotube chemically bonded to the polymer through a covalent bond.

2. The flexible submarine pipe according to claim 1, wherein the polymer and said at least one alumino-silicate or magnesium silicate nanotube are bonded through a bond of the ester, amide, amine, ether, thioether, urea, imine, imide, sulfonamide, carbamate, phosphate, siloxane, silane or carbon-carbon type.

3. The flexible submarine pipe according to any of claims 1 to 2, wherein the polymer is a polyamide optionally including functional lateral chains, a polyethylene including lateral functional chains or a polyvinylidene fluoride including functional lateral chains.

4. The flexible submarine pipe according to any of claims 1 to 3, wherein said at least one nanotube comprises a chemical compound selected from:
- an anti-corrosion agent, and/or
- a CO₂, H₂S, O₂ and/or CH₄ sensor, and/or
- an antioxidant agent.

5. The flexible submarine pipe according to any of claims 1 to 4, comprising, in addition to the layer comprising a polymeric resin comprising at least one alumino-silicate or magnesium silicate nanotube chemically bonded to the polymer through a covalent bond, one or more of the following layers:
- an external polymeric sheath, and/or
- at least one tensile armoring web, and/or
- optionally a pressure vault, and/or
- optionally a metal carcass.

6. A method for preparing a flexible submarine pipe according to any of claims 1 to 5, comprising the following steps:
a) mixing a polymer and at least one alumino-silicate or magnesium silicate nanotube bearing at least one group A which may form a covalent bond with said polymer,
b) extruding for forming a layer comprising said resin,
c) assembling the layer obtained in step b) with at least one other layer.

7. The method according to claim 6, wherein said group A is:
- either a group G selected from:
- a group selected from a halogen, -OH, -COOH, -NH₂, -SH, -OSi(R₇)(R₈)(R₉) and an alkoxyl, and
- a saturated, unsaturated or aromatic, linear, branched or cyclic hydrocarbon chain, substituted with one or several groups selected from Hal, -CO-Hal, -OCO-Hal, -SO₂-Hal, -COOH, -OH, -SH, -CN, -NCO, -OSi(R₇)(R₈)(R₉), -CR₁R₂-Hal, -NR₁H, 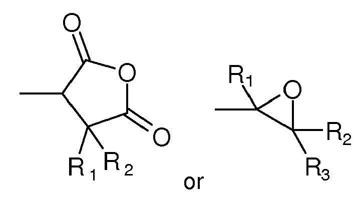 groups ,
wherein:
- R₇, R₈ and R₉ represent independently OH, an alkyl or an alkoxyl,
- R₁, R₂ and R₃ represent independently H or a saturated, unsaturated or aromatic, linear, branched or cyclic hydrocarbon chain, itself optionally substituted with one or several groups selected from a halogen or a -CO-Hal, -OCO-Hal, -SO₂-Hal, -COOR₄, -COR₄, -CR₄R₅-Hal, -OR₄, -SR₄, -NR₄R₅, NR₄COR₅, -COR₄NR₅, -NR₄-CO-NR₅R₆, -O-CO-NR₄, -NR₄-CO-OR₅, -CN, -NO₂, -NCO, 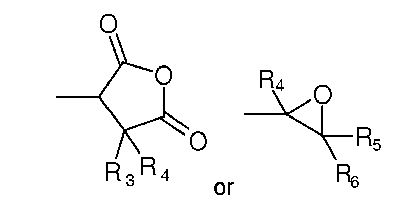 group, wherein R₄, R₅ and R₆ represent independently H or a saturated, unsaturated or aromatic, linear, branched or cyclic hydrocarbon chain,
- Hal represents a halogen selected from a chlorine, bromine and iodine,
- or a group -O-POSS, wherein POSS is a polyhedral oligomeric silsesquioxane:
- of formula (RSiO_{1,5})ₓ, wherein :
- x represents an integer greater than or equal to 6 and less than or equal to 12, and
- R represents:
- a group G as defined above, or
- a saturated, unsaturated or aromatic, linear, branched or cyclic hydrocarbon chain,
it being understood that the groups R of each group RSiO_{1,5} may be identical or different from each other and that at least one group R represents a group G, or
- of formula [(RSiO_{1,5})_{x'}(XRSiO_{1,0})_{x"}], wherein:
- x' and x" represent independently of each other an integer, such that the sum of x' and of x" is greater than or equal to 6 and less than or equal to 12, and
- R is as defined above, and
- X represents a group G as defined above, the groups X of each group XRSiO_{1,0} which may be identical or different with each other and identical with or different from the Rs,
it being understood that adjacent groups A may be bound to each other through a POSS.

8. The method according to claim 7, wherein said group A is selected from:
- a group G' selected from an alkoxyl, -OH and -OSi(R₇)(R₈)(R₉) group, wherein R₇, R₈ and R₉ represent independently OH, an alkyl or an alkoxyl group,
and
- a group O-POSS, wherein POSS is:
- of formula (R'SiO_{1,5})ₓ wherein x represents an integer greater than or equal to 6 and less than or equal to 12, and wherein R' represents:
- a group G' as defined above, or
- a saturated, unsaturated or aromatic, linear, branched or cyclic hydrocarbon chain,
it being understood that the groups R' of each group R'SiO_{1,5} may be identical or different from each other and that at least one group R' represents a group G', or
- of formula [(R'SiO_{1,5})_{x'}(G'R'SiO_{1,0})_{x"}], wherein:
- x' and x" represent independently of each other an integer with x' different from 0, such that the sum of x' and of x" is greater than or equal to 6 and less than or equal to 12, and
- R' is as defined above, and
- the groups G' of each group G'R'SiO_{1,0} may be identical or different from each other and identical with or different from the R's.

9. The method according to claim 8, wherein said group A is a group G' selected from an alkoxyl, -OH and -OSi(R₇)(R₈)(R₉) group, wherein R₇, R₈ and R₉ represent independently OH, an alkyl or an alkoxyl group.

10. The method according to any of claims 6 to 9, wherein:
- the polymer is a polyamide optionally comprising functional lateral chains and said at least one nanotube is a bearer of at least one -OH, NH₂ or COOH group,
- the polymer is a polyethylene including functional lateral chains bearing groups of formula -Si-(OR₁₀)(OR₁₁)(OR₁₂), wherein R₁₀, R₁₁ and R₁₂ are independently alkyl groups and said at least one nanotube is a bearer of at least one -OH, -OSi(R₇)(R₈)(R₉) or alkoxyl group, wherein R₇, R₈ and R₉ represent independently OH, an alkyl or an alkoxyl group, or
- the polymer is a polyvinylidene fluoride including functional lateral chains bearing COOH or anhydride groups, and said at least one nanotube is a bearer of at least one -OH group.

11. The method according to any of claims 6 to 10, comprising a subsequent step d) for cross-linking the assembly obtained during step c) when the covalent bond which may be formed between the group A borne by the alumino-silicate or magnesium silicate nanotube and the polymer is a siloxane bond.

12. The method according to any of claims 6 to 11, for preparing a flexible submarine pipe comprising at least one layer comprising a polyethylene polymeric resin including lateral chains of formula -CH₂-CH₂-Si-(OR₁₀)(OR₁₁)(OR₁₂), wherein R₁₀, R₁₁ and R₁₂ are independently alkyl groups, comprising the steps of :
a₁) melting a polyethylene polymer,
a₂) adding a vinylsilane derivative of formula CH₂=CH-Si-(OR₁₀)(OR₁₁)(OR₁₂), a peroxide initiator and at least one alumino-silicate or magnesium silicate nanotube bearing a hydroxyl, trialkoxysilane or alkoxyl group in order to obtain a polyethylene including functional lateral chains,
a₃) mixing with polyethylene, a catalyst of the cross-linking reaction, optionally an antioxidant and/or a stabilizer,
b) extruding for forming a layer comprising said resin,
c) assembling the layer obtained in step b) with at least one other layer,
d) cross-linking the assembly obtained during step c),
it being understood that steps a₂, a₃ and b) may be carried out simultaneously.

13. The use of a flexible submarine pipe according to any of claims 1 to 5 for transporting fluids.

14. The use according to claim 13, for transporting hydrocarbons.
